# EUROPEAN PATENT SPECIFICATION

(11) **EP 0 546 861 B1**
(45) Date of publication and mention of the grant of the patent: **02.11.1995**
(21) Application number: 92311357.5
(22) Date of filing: 11.12.1992
(51) Int. Cl.: B27B 19/00, B23D 49/00, B23D 51/02, B23D 61/12

(54) **Power-driven saw**
Motorsäge
Scie motorisée

(30) Priority: 11.12.1991 DE 4140847
(43) Date of publication of application: 16.06.1993
(73) Proprietor: Black & Decker Inc., Newark Delaware 19711 (US)
(72) Inventor: Stirm, Michael, W-6370 Oberursel 4 (DE)
(74) Representative: Stagg, Diana Christine

(56) References cited:
- DE-A- 2 934 258
- DE-A- 3 318 507
- DE-A- 3 912 227
- FR-A- 2 528 753
- GB-A- 2 134 038
- SU-A- 157 190
- US-A- 3 495 329
- US-A- 4 628 605

## Description

The invention relates to a power-driven saw with two adjacent saw blades which are oppositely reciprocatable about a common pivot axis, wherein each of said saw blades comprises at least one arrangement of saw teeth arranged on a curved path corresponding to a circle about the pivot axis, with the arrangements of saw teeth of both saw blades located at equal distances from said pivot.

With a known saw of this type (German Patent Application P 29 34 258) the saw blades consist of essentially semi-circular elements which are mounted in a housing, about one wall of which they project with part sections in the central portion. The saw blades of the known saw are reciprocated at high frequency but with a small stroke, so that the risk of injury for the user is reduced compared with other saws. Although this saw can be used quite satisfactorily for work on normal workpieces lying on work benches or the like, the saw is quite unsuitable for use on workpieces which are not advantageously positioned or held in this way.

The object of the invention is to provide a power-driven saw which can be used in a particularly handy manner to cut workpieces which are not immediately accessible for cutting with circular saws or the like.

To achieve this aim, a power-driven saw of the type mentioned initially is so designed according to the invention that each saw blade comprises an elongated pivot section, through one end portion of which the pivot axis extends, and a saw section which extends from the other end portion of the pivot section to one side and carries the curved arrangement of saw teeth, and that the saw section comprises two arrangements of saw teeth one of which is provided at the edge of the saw section further from the pivot axis and the other at the edge nearer to the pivot axis.

The saw according to the invention thus comprises two saw blades designed in essentially the shape of a L or sickle, the pivot section of said saw blades being connected to the pivot axis and the saw sections comprising arrangements of saw teeth extending away on the same side from said pivot section, so that the saw sections can be brought into cutting engagement with a workpiece when the pivot sections are oppositely reciprocated about the pivot axis. The arrangement of saw teeth further from the pivot axis and the arrangement nearer to the pivot axis can optionally be used to cut a workpiece, so that, when the arrangements of saw teeth further from the pivot axis are used, the saw can be guided through a workpiece for example in the manner of a jig saw, while the arrangements of saw teeth nearer to the pivot axis can help, for example, to remove boughs and branches extremely easily from trees and bushes. In every case, the saw according to the invention operates without noteworthy strain on the user, as the oppositely moved saw blades avoid the occurrence of strong reaction forces in the portion of the saw held by the user. The forces acting on the saw sections as a result of engagement with the workpiece are absorbed by the pivot axis, so that high bearing loads caused by movements such as occur for example with jig saws are avoided.

Power driven tools are already known (German Patent No. 34 18 785) which have two L-shaped or sickle-shaped cutting blades which are oppositely reciprocated about a common pivot axis and which comprise, at the edge further from the pivot axis, an arrangement of cutting teeth curved in the form of an arc. However, these are shears used to cut open plaster casts or the like, in which a fixed counter-element is arranged between the two cutting elements, which engages beneath the plaster case or the like with its free end and cooperates with the cutting elements in the manner of shears. It is thus also only possible to cut through a workpiece which can be guided between the edges of the cutting elements comprising the curved arrangements of cutting teeth and the counter-element, while it is not possible at all, for example, to cut into a plate-like workpiece from above.

In a preferred version of the saw according to the invention, the pivot section and the saw section of every saw blade consist of two separate parts firmly connected to each other, these parts being screwable to each other for example.

With such a structure it is possible to remove the saw sections from the pivot sections, for example by releasing the screw joint, and replace them with new saw sections if the teeth are desired for a specific cutting procedure. This replacement of the saw sections can take place without the saw blades having to be detached from their common pivot axis or from the drive reciprocating them.

To ensure that the saw blades do not spread apart upon engagement with a workpiece, but can be reciprocated closely adjacent to each other, a support projection can be secured in the saw section of one saw blade, which projection extends into an elongated slot in the saw section of the other saw blade, said slot lying on a circular path about said pivot axis, and engages behind this on the outer side.

Such a support projection not only effects a reciprocal support of the saw sections, so that their arrangements of saw teeth do not shift in radial direction relative to the pivot axis when subjected to load, but in particular keeps the two saw sections close together and prevents their spreading apart upon engagement with a workpiece.

To provide further support, support rollers can engage with the outer sides of the pivot sections of both saw blades.

An electric motor is preferably used to drive the saw blades. This motor can be powered by a rechargeable battery.

A particularly simply structured and compact coupling between the saw blades and their drive device is obtained by means of a two-arm drive lever mounted pivotably about a lever pivot axis, one arm of said lever being coupled with the one saw blade and its other arm with the other saw blade for transmission of drive forces onto same, while one arm of the two-arm drive lever is coupled with a revolving driven eccentric element.

With such a structure, in which the coupling between drive lever and saw blades preferably comprises rigid connecting-rod elements, each pivotably connected to the drive lever and the corresponding saw blade, a two-arm drive lever is reciprocated about its lever pivot axis by a single driven eccentric element, say an eccentric pin seated on a driven gear, the drive movements for both saw blades being taken off from said drive lever.

In order to couple the eccentric element with the two-arm drive lever, a rigid connecting-rod part can be present which is pivotably connected to the drive lever and to the eccentric element. This connection can be at the same distance from the lever pivot axis as the connection, provided at the same lever arm, of connecting-rod element and drive element.

In order to obtain a particularly simple while stable structure, the drive lever can consist of two part levers which are spaced in the direction of the lever pivot axis and between which the coupling pins forming the pivots for the connecting-rod elements extend.

The invention is described in detail below with reference to the drawings which show an embodiment:-
Figure 1 shows an electrically-driven saw in perspective view;
Figure 2 shows the individual parts of the saw of Figure 1 in an exploded view, and

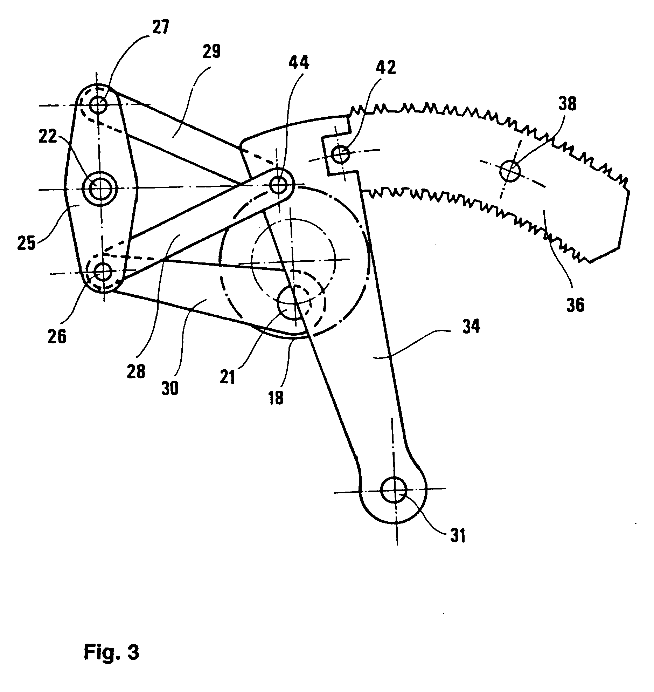

Figure 3 shows, in a diagrammatic view, the drive arrangement for the saw blades of the saw according to Figures 1 and 2.

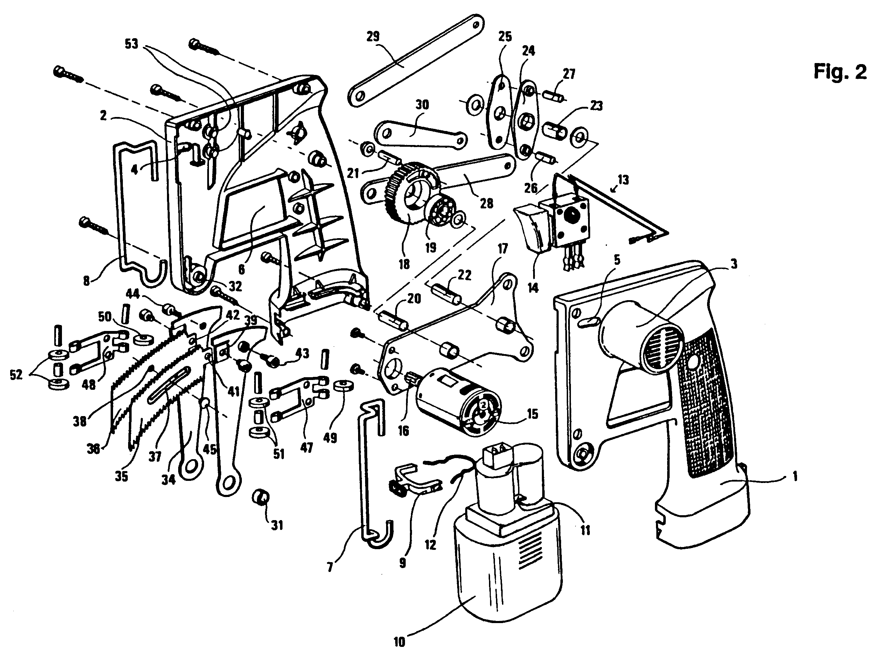

The illustrated saw has a housing consisting of two half-shells 1, 2, onto one half-shell 1 a motor housing 3 is moulded to accommodate the electric motor 15 (Figure 2) forming the drive. At the lower end of the pistol-grip-shaped handle formed at the housing 1, 2 there is a reception aperture into which is inserted, in the usual manner, a rechargeable battery 10 which is held in its inserted position by a U-shaped spring bracket 12 fitted into corresponding recesses in the housing 1, 2 said bracket engaging with inwardly directed sections behind web-shaped portions 11 in the upper section of the battery 10 and thus holding the battery 10 in its position in the housing 1, 2.

A U-shaped bracket with a finger section 9 serves to release the battery, said finger section being displaceably held in the housing 1, 2 and engaging, upon being pressed into the housing 1, 2 with the free ends of the legs of the spring bracket 12 and spreading the latter open, so that the battery 10 is freed for removal from the housing. This manner of arranging and holding a battery in the housing of an electric tool is known.

The saw contains two saw blades 33, 35 arid 34, 36. Each of the saw blades has a pivot section 33 or 34 and a saw section 35 or 36. The pivot sections 33, 34 sit with their lower ends jointly and pivotably on a bush-shaped pivot axis 31 which is held on projections formed in the housing 1, 2, projection 32 in half-shell 2 being recognizable in Figure 2.

At the ends of the pivot sections 33, 34 facing away from the pivot axis 31, the said sections comprise, at their forward edges, securing sections displaced outwardly from the main plane of the pivot section in question, in which securing sections securing bores are present, bore 39 of pivot section 33 being recognizable in Figure 2. The saw sections 35, 36 having, at their ends near to the pivot sections 33, 34, lugs with bores 41, 42. The lugs fit into the recesses formed by the deformation in the area of the securing bores 39 of the pivot sections 33, 34, so that the saw sections 35, 36 can in this way be secured by means of screws against tilting in the plane of the pivot sections 33, 34. The screws indicated in Figure 2 are pushed through the securing bores 39 from outside and then screwed into the bores 41, 42, which comprise an inner thread, of the saw sections 35, 36, so that in this way a firm but releasable connection is obtained between pivot section 33 or 34 and saw section 35 or 36.

It is noted that, when fitted, the screws used to connect pivot sections 33, 34 and saw sections 35, 36 extend with their heads into slots 5, 4 in the housing halves 1, 2 said slots lying on an arc the centre of which is arranged on pivot axis 31. The screw heads therefore move during the movement, yet to be described, of the saw blades in the slots 5, 4 and are accessible from outside in order that the saw sections 35, 36 can be replaced.

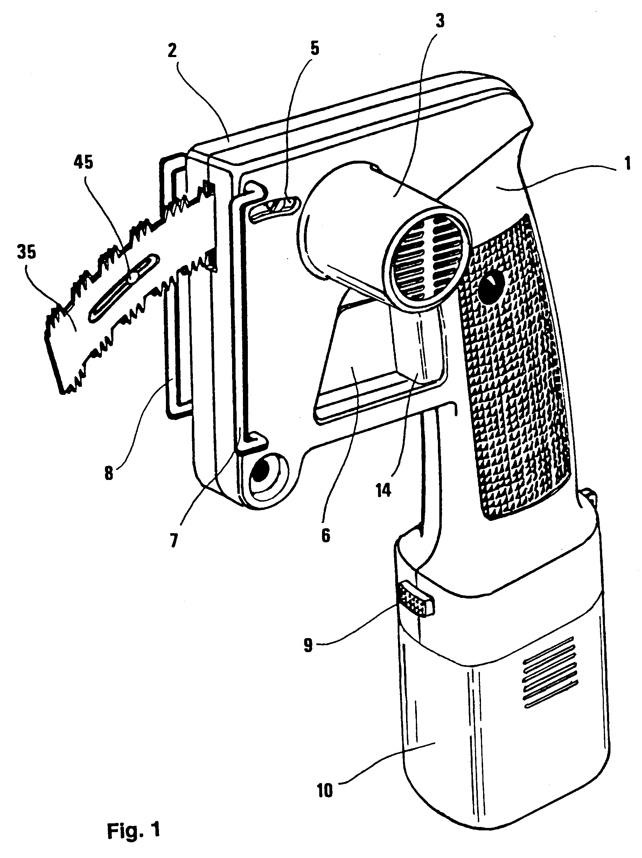

As is to be seen in Figures 1 and 2, the saw section 36 comprises a bore 38 which lies in the area of a curved slot 37 in the saw section 35, the slot 37 being arranged on a circular path the centre of which lies in the pivot axis 31. A rivet 45 lies with its head in the area of the slot 37 and there abuts, in a manner not described in detail, the outer side of an edge portion of the slot 37 and is secured with its shaft in the aperture 38, so that saw sections 35, 36 are held together in face-like manner by the rivet 45, but can move relative to each other because of the curved slot 37.

As can be seen in Figure 1, saw sections 35, 36 project out from the front side of the housing 1, 2 and rod-like stop elements 7, 8 held laterally in the housing halves 1, 2 ensure that the front surface of the housing 1, 2 does not normally come into contact with a workpiece.

At spring arms formed by holding elements 47, 48, pressure rollers 49, 50 sit at the rear spring arms and pairs of pressure rollers 51, 52 at the front spring arms. The holding elements 47, 48 are secured at securing projections in the housing half-shells 1, 2, the securing projections 53 of housing half-shell 2 being recognizable in Figure 2. When fitted, the pressure rollers 49, 51 are pressed against the outside of pivot section 33, the two pressure rollers 51 lying above and below bore 39. Pressure rollers 50, 52 are correspondingly pressed against the outside of pivot section 43. In this way, pivot sections 33, 34 are supported against a spreading-out in this area in their upper portions at which the saw sections 35, 36 extending forward from pivot sections 33, 34 are secured.

As shown, saw sections 35, 36 comprise an arrangement consisting of saw teeth both at their upper longitudinal edge and at their lower longitudinal edge, each arrangement being curved in the form of an arc and the centres of the arcs lying on pivot axis 31. The saw teeth of the different arrangements are, of course, set so that the saw teeth of the essentially plate-like adjacent saw sections 35, 36 do not hinder each other upon movement of saw sections 35, 36 relative to each other, i.e. the saw teeth are essentially set outwardly.

In the centre portion of the housing, in the assembled state, an elongated carrier part 17 is mounted to the forward end of which an electric motor 15 is secured with screws, so that the pinion 16 formed at the free end of the armature shaft of the electric motor 15 extends through an aperture in the carrier part 17.

In the centre portion of the carrier part 17 there is secured an axle 20 on which a ball bearing 19 sits which carries a gear 18 which meshes with the pinion 16 of the electric motor 15. The gear 18 carries an eccentric pin 21.

On a lever pivot axis 22 secured in the rear area of the carrier part 17 a two-arm drive lever is mounted which consists of two part levers 24, 25 arranged in axial direction of the lever pivot axis 22, said part levers being secured on a bearing bush 23 which is rotatably mounted on the lever pivot axis 22. Coupling pins 26, 27 are secured at the arms of the drive lever 24, 25 at equal distances from the lever pivot axis 22.

On the portion of the coupling pin 26 located between the part levers 24, 25 one end of a rectilinear, rigid connecting-rod element 28 and alongside it one end of a rectilinear, rigid connecting-rod part 30 are pivotably mounted. The other end of connecting-rod part 30 is pivotably arranged on the eccentric pin 21 which is secured in the gear 18. On the portion of the coupling pin 27 located between the part levers 24, 25 there is pivotably held one end of a rectilinear, rigid connecting-rod element 29, the shape and length of which correspond to those of connecting-rod element 28.

The other end of connecting-rod element 28 is pivotably held by means of a screw 43 on a baring bush which is provided at the upper end of the pivot section 33 of the one saw blade, while the other end of connecting-rod element 29 is pivotably connected in the same way by means of a screw 44 to the pivot section 34 of the other saw blade.

As already mentioned, the electric motor 15 is powered by the battery 10 and between the battery and the electric motor there is arranged a normal switch 13 the switch actuator 14 of which extends into a handle opening 6 formed in the housing 1, 2 and can thus be moved by the user, which holds the saw by the pistol-shaped handle, by means of one finger from the illustrated rest position against resilient force into a position closing the switch 13, to connect the electric motor 15 to the battery 10.

Powering of the electric motor 15 and the resultant rotation of its armature shaft effects, via the pinion 16, a rotation of the gear 18, so that the eccentric pin 21 describes a rotary movement about the rotation axis of gear 18. The connecting-rod part 30 is thereby moved and reciprocates the drive lever 24, 25 about the lever pivot axis 22 so that the ends of the connecting-rod elements 28 and 29 connected to the coupling pins 26, 27 are also reciprocated, which leads to a corresponding reciprocating movement of the saw blades 33, 35 and 34, 36 about pivot axis 31. As the coupling pin 26 describes a movement in the direction of the saw blades if the coupling pin 27 moves away from the saw blades, the result is an opposite pivoting movement of both saw blades, i.e. the saw section 35 of the one saw blade moves further out from the housing 1, 2 if the saw section 36 of the other saw blade moves further into the housing 1, 2. The frequency of the saw-blade movement is preferably in the range from 35 Hz to 45 Hz.

As the distances between the coupling pins 26 and 27 and the lever pivot axis 22 are equal and the connecting-rod elements 28, 29 also have the same dimensions and are connected at corresponding points to the pivot sections 33, 34 of the saw blades, the strokes of the saw blades are equal, and as a result of the relatively small strokes, which preferably lie in the range from 6mm to 18mm, especially 10mm to 14mm, there is also only an extremely small risk of injury for the user.

## Claims

1. Power-driven saw with two adjacent saw blades (33,35;34,36) which are oppositely reciprocated about a common pivot axis (31) wherein each of said saw blades comprises at least one arrangement of saw teeth arranged on a curved path corresponding to a circle about the pivot axis (31) with the arrangements of saw teeth of both saw blades (33,35;34,36) located in equal distances from said pivot axis (31),
characterised in that each of said saw blades (33,35;34,36) comprises an elongated pivot section (33,34) with the pivot axis (31) extending through one end portion thereof and further comprises a saw section (35,36) projecting from the other end portion of said pivot section (33;36) to one side and carrying said curved arrangement of saw teeth and that said saw section (33;36) comprises two arrangements of saw teeth, one at the edge remote of said pivot axis (31) and the other one at the edge nearer to said pivot axis (31).

2. Saw according to Claim 1, wherein said pivot section (33;34) and said saw section (35;36) consist of two separate parts releasably connected.

3. Saw according to Claim 2, wherein said pivot section (33,34) and said saw section (35,36) are screwed together.

4. Saw according to Claim 1, 2 or 3, wherein a support projection (45) is secured in the saw section (36) of one saw blade and projects into an elongated slot (37) in the same section (35) of the other saw blade which slot is located on a circular path about said pivot axis (31), said support projection (45) being in engagement with the outer side of said saw section (35).

5. Saw according to any one of Claims 1 to 4, wherein support rollers (49,51;50,52) are in engagement with the outer sides of said pivot sections (33;34) of both saw blades.

6. Saw according to any one of Claims 1 to 5, wherein the drive for the saw blades (33,35;34,36) is an electric motor (16).

7. Saw according to Claim 6, wherein the electric motor (16) is powered by a rechargeable battery (10).

8. Saw according to Claims 1 to 7, wherein a two-arm drive lever (24,25) mounted pivotably about a lever pivot axis (22) wherein one arm of said drive lever (24,25) is coupled with the one saw blade (33;35) and the other arm is coupled with the other saw blade (34;36) for transmitting drive forces and by the drive coupling (30) of one of the arms of said two-arm drive lever (24,25) with a revolving driven eccentric element (21).

9. Saw according to Claim 8, wherein the coupling between said drive lever (24,25) and the saw blades (33,35;34,36) consists of rigid rod elements (28;29) each pivotably connected with the drive lever (24,25) and the corresponding saw blade (33,35;34,36).

10. Saw according to Claim 10, wherein the connections (26;27) of said rod elements (28;29) with said drive lever (24,25) have the same distances from said lever pivot axis (22).

11. Saw according to one of Claims 8 to 10, wherein said drive lever (24,25) and said eccentric element (21) are coupled by a rigid rod part (30) pivotably connected with said drive lever (24,25) and said eccentric element (21).

12. Saw according to Claim 11, wherein the connection (26) of said rod part (30) and said drive lever (24,25) is the same distance from said lever pivot axis (22) as the connection (26) of rod element (28) and drive lever (24,25) at the same lever arm.

13. Saw according to one of Claims 8 to 12, wherein said drive lever (25,25) comprises two part levers (24;25) spaced in the direction of the lever pivot axis (24) between which part levers (24;25) pins (26,27) extend forming connections for said rod elements (28,29).

14. Saw according to one of Claims 8 to 13, wherein said eccentric element is an eccentric pin (21) mounted on a driven gear (18).

15. Saw section for the saw blade of a saw according to Claim 2 or 3, characterised by circularly curved arrangements of saw teeth at opposite edges and by a connection opening (39;42) at one of the end edges connecting the two arrangements of saw teeth.

## Patentansprüche

1. Kraftgetriebene Säge mit zwei einander benachbarten Sägeblättern (33, 35; 34, 36), die um eine gemeinsame Schwenkachse (31) gegensinnig hin- und herbewegbar sind, wobei jedes der Sägeblätter zumindest eine Anordnung von Sägezähnen aufweist, die auf einer gekrümmten Bahn liegen, die einem Kreisbogen um die Schwenkachse (31) entspricht, wobei die Anordnungen von Sägezähnen der beiden Sägeblätter (33, 35; 34, 36) mit gleichen Abständen von der Schwenkachse (31) angeordnet sind,
**dadurch gekennzeichnet**, daß jedes der Sägeblätter (33, 35; 34, 36) einen länglichen Schwenkabschnitt (33; 34), durch dessen einen Endbereich sich die Schwenkachse (31) erstreckt, und außerdem einen Sägeabschnitt (35; 36) aufweist, der sich vom anderen Endbereich des Schwenkabschnittes (33; 34) zu einer Seite erstreckt und die gekrümmte Anordnung von Sägezähnen trägt, und daß der Sägeabschnitt (35; 36) zwei Anordnungen von Sägezähnen aufweist, eine an der der Schwenkachse (31) ferneren Kante und die andere an der der Schwenkachse (31) näheren Kante.

2. Säge nach Anspruch 1, wobei der Schwenkabschnitt (33; 34) und der Sägeabschnitt (35; 36) aus zwei gesonderten, lösbar miteinander verbundenen Teilen bestehen.

3. Säge nach Anspruch 2, wobei der Schwenkabschnitt (33; 34) und Sägeabschnitt (35; 36) miteinander verschraubt sind.

4. Säge nach Anspruch 1, 2 oder 3, wobei ein Stützvorsprung (45) am Sägeabschnitt (36) des einen Sägeblattes befestigt ist und sich in einen länglichen Schlitz (37) im gleichen Abschnitt (35) des anderen Sägeblattes erstreckt, wobei der Schlitz auf einer Kreisbahn um die Schwenkachse (31) liegt und wobei der Stützvorsprung (45) mit der Außenseite des Sägeabschnittes (35) eingreift.

5. Säge nach einem der Ansprüche 1 bis 4, wobei Stützrollen (49, 51; 50, 52) an den Außenseiten der Schwenkabschnitte (33; 34) beider Sägeblätter angreifen.

6. Säge nach einem der Ansprüche 1 bis 5, wobei der Antrieb für die Sägeblätter (33, 35; 34, 36) ein Elektromotor (16) ist.

7. Säge nach Anspruch 6, wobei der Elektromotor (16) von einer wiederaufladbaren Batterie (10) gespeist wird.

8. Säge nach einem der Ansprüche 1 bis 7, wobei ein zweiarmiger Antriebshebel (24, 25) schwenkbar um eine Hebelschwenkachse (22) gelagert ist, wobei ein Arm des Antriebshebels (24, 25) mit dem einen Sägeblatt (33, 35) und der andere Arm mit dem anderen Sägeblatt (34, 36) gekoppelt ist, um Antriebskräfte zu übertragen, wobei einer der Arme des zweiarmigen Antriebshebels (24, 25) mittels der Kupplung (30) durch ein umlaufend angetriebenes Exzenterelement (21) angetrieben wird.

9. Säge nach Anspruch 8, wobei die Kopplung zwischen dem Antriebshebel (24, 25) und den Sägeblättern (33, 35; 34, 36) aus starren Pleuelelementen (28; 29) besteht, die jeweils schwenkbar mit dem Antriebshebel (24, 25) und dem zugehörigen Sägeblatt (33, 35; 34, 36) verbunden sind.

10. Säge nach Anspruch 9, wobei die Verbindungen (26; 27) zwischen den Pleuelelementen (28; 29) und dem Antriebshebel (24, 25) die gleichen Abstände von der Hebelschwenkachse (22) haben.

11. Säge nach einem der Ansprüche 8 bis 10, wobei der Antriebshebel (24, 25) und das Exzenterelement (21) über ein starres Pleuelteil (30) miteinander gekoppelt sind, das schwenkbar mit dem Antriebshebel (24, 25) und dem Exzenterelement (21) verbunden ist.

12. Säge nach Anspruch 11, wobei die Verbindung (26) des Pleuelteils (30) mit dem Antriebshebel (24, 25) den gleichen Abstand von der Hebelschwenkachse (22) hat wie die Verbindung (26) des Pleuelelementes (28) mit dem Antriebshebel (24, 25) am gleichen Hebelarm.

13. Säge nach einem der Ansprüche 8 bis 12, wobei der Antriebshebel (24, 25) zwei Teilhebel (24; 25) enthält, die in Richtung der Hebelschwenkachse (22) beabstandet sind, wobei sich zwischen den Teilhebeln (24; 25) Stifte (26; 27) erstrecken, die Anlenkungen für die Pleuelelemente (28, 29) bilden.

14. Säge nach einem der Ansprüche 8 bis 13, wobei das Exzenterelement ein Exzenterstift (21) ist, der auf einem angetriebenen Zahnrad (18) sitzt.

15. Sägeabschnitt für das Sägeblatt einer Säge gemäß Anspruch 2 oder 3, **gekennzeichnet durch** kreisbogenförmige Anordnungen von Sägezähnen an gegenüberliegenden Kanten und durch eine Verbindungsöffnung (41; 42) an einer der Endkanten, die beide Anordnungen von Sägezähnen verbindet.

## Revendications

1. Scie électrique ayant deux lames de scie adjacentes (33, 35; 34, 36) se déplaçant en va-et-vient de manière opposée autour d'un axe de pivotement commun (31), dans laquelle chacune desdites lames de scie comporte au moins un agencement de dents de scie agencé sur un trajet incurvé correspondant à un cercle situé autour de l'axe de pivotement (31), les agencements de dents de scie des deux lames de scie (33, 35; 34, 36) étant situés à égale distance dudit axe de pivotement (31),
caractérisée en ce que chacune desdites lames de scie (33, 35; 34, 36) comporte une partie de pivotement allongée (33, 34), l'axe de pivotement (31) s'étendant à travers une première partie d'extrémité de celle-ci et comporte en outre une partie de scie (35, 36) faisant saillie à partir de l'autre partie d'extrémité de ladite partie de pivotement (33; 36) vers un premier côté et supportant ledit agencement incurvé de dents de scie et en ce que ladite partie de scie (33; 36) comporte deux agencements de dents de scie, un premier étant situé au niveau du bord éloigné dudit axe de pivotement (31) et l'autre étant situé au niveau du bord plus proche dudit axe de pivotement (31).

2. Scie selon la revendication 1, dans laquelle ladite partie de pivotement (33; 34) et ladite partie de scie (35; 36) sont constituées de deux parties séparées reliées de manière libérable.

3. Scie selon la revendication 2, dans laquelle ladite partie de pivotement (33, 34) et ladite partie de scie (35, 36) sont vissées ensemble.

4. Scie selon la revendication 1, 2 ou 3, dans laquelle une saillie formant support (45) est fixée dans la partie de scie (36) d'une première lame de scie et fait saillie à l'intérieur d'une fente allongée (37) située dans la même partie (35) de l'autre lame de scie laquelle fente est située sur un trajet circulaire situé autour dudit axe de pivotement (31), ladite saillie formant support (45) étant en contact avec le côté extérieur de ladite partie de scie (35).

5. Scie selon l'une quelconque des revendications 1 à 4, dans laquelle des rouleaux de support (49, 51; 50, 52) sont en contact avec les côtés extérieurs desdites parties de pivotement (33; 34) des deux lames de scie.

6. Scie selon l'une quelconque des revendications 1 à 5, dans laquelle l'entraînement des lames de scie (33, 35; 34, 36) est un moteur électrique (16).

7. Scie selon la revendication 6, dans laquelle le moteur électrique (16) est alimenté par une batterie rechargeable (10).

8. Scie selon les revendications 1 à 7, dans laquelle un levier d'entraînement à deux bras (24, 25) est monté de manière pivotante autour d'un axe de pivotement de levier (22), dans laquelle un bras dudit levier d'entraînement (24, 25) est relié à la première lame de scie (33; 35) et l'autre bras est relié à l'autre lame de scie (34; 36) pour transmettre les forces d'entraînement et par l'intermédiaire de la liaison d'entraînement (30) d'un des bras dudit levier d'entraînement à deux bras (24, 25) avec un élément excentré (21) entraîné à tourner.

9. Scie selon la revendication 8, dans laquelle la liaison existant entre ledit levier d'entraînement (24, 25) et les lames de scie (33, 35; 34, 36) est constituée d'éléments formant tige rigide (28; 29) chacun étant relié de manière pivotante au levier d'entraînement (24, 25) et à la lame de scie correspondante (33, 35; 34, 36).

10. Scie selon la revendication 9, dans laquelle les liaisons (26, 27) desdits éléments formant tige (28; 29) avec ledit levier d'entraînement (24, 25) sont à la même distance à partir dudit axe de pivotement de levier (22).

11. Scie selon l'une quelconque des revendications 8 à 10, dans laquelle ledit levier d'entraînement (24, 25) et ledit élément excentré (21) sont reliés à une partie formant tige rigide (30) reliée de manière pivotante audit levier d'entraînement (24, 25) et audit élément excentré (21).

12. Scie selon la revendication 11, dans laquelle la liaison (26) de ladite partie formant tige (30) et dudit levier d'entraînement (24, 25) est à la même distance à partir dudit axe de pivotement de levier (22) que la liaison (26) de l'élément formant tige (28) et du levier d'entraînement (24, 25) existant au niveau du même bras de levier.

13. Scie selon l'une quelconque des revendications 8 à 12, dans laquelle ledit levier d'entraînement (24, 25) comporte deux leviers partiels (24; 25) espacés dans la direction de l'axe de pivotement de levier (24), leviers partiels (24; 25) entre lesquels des doigts (26, 27) s'étendent en formant des liaisons pour lesdits éléments formant tige (28, 29).

14. Scie selon l'une quelconque des revendications 8 à 13, dans laquelle ledit élément excentré est un doigt excentré (21) monté sur un engrenage entraîné (18).

15. Partie de scie pour la lame de scie d'une scie selon la revendication 2 ou 3, caractérisée en ce qu'elle comporte des agencements incurvés circulaires de dents de scie au niveau des bords opposés et une ouverture de liaison (39; 42) située au niveau d'un des bords d'extrémité reliant les deux agencements de dents de scie.
